# EUROPÄISCHE PATENTSCHRIFT

(11) **EP 2 882 557 B1**
(45) Veröffentlichungstag und Bekanntmachung des Hinweises auf die Patenterteilung: **07.11.2018**
(21) Anmeldenummer: 13736877.5
(22) Anmeldetag: 08.07.2013
(51) Int. Cl.: B23D 29/00

(54) **SPANNLITZENTRENNVORRICHTUNG**
PRE-STRESSING TENDON SEPARATION DEVICE
DISPOSITIF DE SECTIONNEMENT DE CÂBLES DE HAUBANAGE

(30) Priorität: 07.08.2012 DE 102012214010
(43) Veröffentlichungstag der Anmeldung: 17.06.2015
(73) Patentinhaber: Wobben Properties GmbH, 26607 Aurich (DE)
(72) Erfinder: GÖPFERT, Heinrich, 26871 Papenburg (DE); GRAF, Christoph, 41836 Hückelhoven (DE)
(74) Vertreter: Eisenführ Speiser
(86) Internationale Anmeldenummer: PCT/EP2013/064409
(87) Internationale Veröffentlichungsnummer: WO 2014/023499

(56) Entgegenhaltungen:
- DE-A1- 1 909 278
- GB-A- 1 331 939
- JP-A- S6 046 836
- SU-A- 236 416
- SU-A- 1 152 729

## Beschreibung

Die vorliegende Erfindung betrifft eine Spannlitzentrennvorrichtung für Spannlitzen aus Stahl, insbesondere Spannlitzen von Spannbetonbauwerken, wie beispielsweise Türmen von Windenergieanlagen, die zum Trennen an eines Bündels bestehend aus einer Mehrzahl von Spannlitzen in einem Arbeitsgang eingerichtet ist. SU236416A offenbart eine Vorrichtung gemäß dem Oberbegriff des Anspruchs 1. GB 1 331 939 A zeigt eine Schneidemaschine zum Trennen von länglichen Gegenständen, nämlich Metallstangen, Stäben und Rohren, bei dem mittels eines Hydraulikstößels und zweier Klingen in linear geführter Bewegung die länglichen Gegenstände geschnitten werden.

Zum Versteifen von Spannbetonbauwerken, insbesondere im Bereich der Spannbetontürme, werden Spannlitzen verwendet, die durch Aufbringen einer Zugkraft eine Verspannung und sämtliche Versteifung der Bauwerkstruktur bewirken. Am Beispiel von Windenergieanlagen werden diese Spannlitzen in gespanntem Zustand mit dem Bauwerk fest verbunden. Bei Windenergieanlagen wird die feste Verbindung z. B. erreicht, indem die Spannlitzen zu einem Bündel zusammengefasst mit dem Fundament verankert werden. Die Verankerung erfolgt vorzugsweise, indem die gespannten Spannlitzen mittels eines Zugankers an der Decke des Turmkellers befestigt werden. Diese Befestigung erfolgt typischerweise, indem die Spannlitzen bei Arbeiten im Turmkeller durch eine entsprechende Öffnung in der Kellerdecke durchgeführt werden, von einer hydraulischen Stempelvorrichtung gespannt und sodann mittels eines speziellen Ankers gegen die Decke befestigt werden. Im Anschluss an die Spann- und Befestigungsprozedur existiert im Regelfall noch ein mehr oder weniger langer Überschuss der Spannlitzen, die aus der Kellerdecke und dem Befestigungsanker in den Keller hinabhängen. Diese Spannlitzen, die immer noch im Bündel vorliegen, müssen aus Arbeitssicherheitsgründen und zum verbesserten Zugang des Turmkellers entfernt werden.

Da die Spannlitzen aufgrund ihrer mechanischen Anforderungen aus hochfestem Material, insbesondere aus Stahl oder einer Stahllegierung bestehen, ist das Trennen der Spannlitzen technisch anspruchsvoll. Bislang ist es erforderlich, das Spannlitzenbündel mittels Trennschleifmaschinen zu durchtrennen. Hierbei kommt es zu starker Funkenbildung und Rauchentwicklung. Dies wird im Stand der Technik als Nachteil empfunden.

Der Einsatz konventioneller Litzentrenner, die zum "Abkneifen" - dem scherenden Trennen der Litzen - eingerichtet sind, ist bei den hier vorgefundenen Litzenbündeln nicht ohne weiteres möglich, da diese jeweils nur zum Zertrennen einzelner Litzen in der Lage sind. Ein Einsatz solcher Vorrichtungen würde bedingen, dass das Litzenbündel aufgefasert wird und die einzelnen Litzen des Bündels voneinander separiert werden, um ein Ansetzen der Litzentrenner zu ermöglichen. Dies hat zwei weitere Nachteile: Zum einen ist durch die begrenzte Flexibilität der Litzen ein relativ großer Abstand relativ zu dem Anker des Litzenbündels notwendig, um die notwendige Separierung der einzelnen Litzen zu erreichen. Zum anderen ist es so gut wie ausgeschlossen, alle Litzen auf der gleichen Höhe bzw. in im Wesentlichen der gleichen Schnittebene zu trennen, wodurch eine Vielzahl von scharfkantigen Graten in unterschiedlichen Höhen im Turmkeller entstehen. Ein Versiegeln der getrennten Spannlitzen zum Korrosionsschutz wird hierdurch ebenfalls erschwert. Falls ein Versiegeln mittels Aufsetzen einer Schutzkappe vorgesehen ist, ist dies mitunter nicht möglich.

Als weiterer Nachteil wird empfunden, dass ein solcher Arbeitsvorgang zeitintensiv ist.

Hiervon ausgehend lag der vorliegenden Erfindung die Aufgabe zugrunde, eine Spannlitzentrennvorrichtung anzugeben, die die vorstehend aufgeführten Nachteile möglichst weitgehend abmildert. Die vorliegende Erfindung löst die ihr zugrunde liegende Aufgabe bei einer Spannlitzentrennvorrichtung der eingangs genannten Art, indem diese die Merkmale des Anspruchs 1 aufweist. Unter einem Arbeitsgang wird hierbei das Positionieren der Spannlitzentrennvorrichtungen relativ zu den Spannlitzen, und das Ausführen einer Schnittbewegung bis zum vollständigen Trennen der positionierten Spannlitzen ohne zwischenzeitliches Umsetzen der Spannlitzentrennvorrichtung oder zwischenzeitliches Re-positionieren der Spannlitzen verstanden. Unter dem Durchqueren wird hierbei verstanden, dass ein durch die Durchführungsöffnung definierter freier Querschnitt von dem Schneidkörper durch dessen Bewegung in dem Schlitz bis auf Null verringert wird, vorzugsweise indem der Schneidkörper mit den Schneidkanten voran durch den Schlitz hindurch bewegt wird. Vorzugsweise sind die Durchführungsöffnungen derart voneinander beabstandet, dass ihre Anordnung der Anordnung der Spannlitzen innerhalb des Spannlitzenbündels entspricht.

Die Erfindung macht sich die Erkenntnis zunutze, dass mit einer Vorrichtung, die eine vorzugsweise räumlich eng beieinander angeordnete Mehrzahl von Durchführungsöffnungen für Spannlitzen aufweist, die Spannlitzen von einem in der Spannlitzentrennvorrichtung geführten Schneidkörper mittels Scherung trennbar sind, ohne dass hierfür ein Aufbiegen des Spannlitzenbündels zum Vereinzeln der Spannlitzen erforderlich ist. Jede Durchführungsöffnung ist zur Aufnahme jeweils einer Spannlitze eingerichtet, die Spannlitze wird in der jeweiligen Durchführungsöffnung geführt und ein Ausweichen von dem Schneidkörper mittels der Durchführungsöffnung verhindert. Durch die Positionierung der Spannlitzen in jeweils einer Durchführungsöffnung wird außerdem gewährleistet, dass mit der Spannlitzentrennvorrichtung gemäß der Erfindung in einem, vorzugsweisen durchgängigen, Schneidvorgang der Schneidkörper durch alle Spannlitzen hindurchfahren kann, ohne dass zwischenzeitlich die Spannlitzentrennvorrichtung oder die Spannlitzen selbst repositioniert werden müssen. Hierdurch wird ein einheitliches Schnittbild derart erzeugt, dass die Spannlitzen allesamt auf einer Höhe abgetrennt werden. Vorzugsweise sind die Durchgangsöffnungen gleichmäßig entlang eines vorgegebenen Kreisumfangs in dem Gehäuse angeordnet. Der Kreisumfang entspricht vorzugsweise demjenigen Teilkreisumfang, der auch das Spannlitzenbündel definiert und demjenigen Teilkreisumfang entspricht, in welchem die Spannlitzen durch die für die Befestigung am Bauwerk vorgesehene Verankerung durchgeführt sind. Der Schneidkörper weist für jede der Durchführungsöffnungen eine separate Schneide mit einer Schneidkante auf. Es hat sich herausgestellt, dass der Verschleiß des Verschleißkörpers insgesamt geringer wird, wenn für jede Durchgangsöffnung eine separate Schneide vorgesehen wird. Die Schneidkanten der Schneiden sind in Schneidrichtung relativ zueinander derart versetzt, dass bei Bewegung des Schneidkörpers eine Anzahl von Durchführungsöffnungen gleichzeitig von den Schneidkanten durchquert wird, die geringer als die Gesamtzahl der Mehrzahl von Durchführungsöffnungen ist. Hierdurch wird der Vorteil erreicht, dass für die Bewegung des Schneidkörpers in der Schneidrichtung eine verringerte Antriebskraft ausreichend ist als es der Fall wäre, wenn sämtliche Spannlitzen gleichzeitig mit dem Schneidkörper in Kontakt treten würden. In einer bevorzugten Ausführungsform werden die Spannlitzen durch eine entsprechende Versetzung der Schneidkanten in Schneidrichtung relativ zueinander zunächst paarweise mittels des Schneidkörpers getrennt. Es stehen vorzugsweise zu keinem Zeitpunkt sämtliche Spannlitzen in Kontakt mit dem Schneidkörper, sondern immer nur einige.

In einer bevorzugten Weiterbildung sind die Schneidkanten in Schneidrichtung relativ zu einander derart versetzt, dass bei Bewegung des Schneidkörpers in der Schneidrichtung eine Anzahl von ersten Durchführungsöffnungen zuerst durchquert wird, und eine Anzahl von zweiten Durchführungsöffnungen durchquert wird, sobald die ersten Durchgangöffnungen zu 50% oder mehr des Durchmessers in Schneidrichtung durchquert sind. Vorzugsweise liegt der Versatz der Schneidkanten in der Schneidrichtung in einem Bereich von 50% bis 100%. Ein Vorteil der partiellen Überlappung des Durchtrennens von ersten und zweiten Durchführungsöffnungen wird darin gesehen, dass ein stetigerer Kraftverlauf im Antrieb des Schneidkörpers ermöglicht wird, da der Schneidkörper nicht zwischen dem Trennen der ersten und zweiten Anzahl von Spannlitzen ruckartig vorschnellt. Der Vorteil einer Überlappung von 50% liegt darin, dass die Kontaktfläche, welche die Schneidkanten mit den in der Durchführungsöffnung anzuordnenden Spannlitzen haben, beim Schneidvorgang konstant bleibt, was einen gleichmäßigen Kraftverlauf zur Folge hat.

Mit einer weiteren bevorzugten Ausführungsform sind die Schneidkanten in Schneidrichtung relativ zueinander derart versetzt, dass bei Bewegung des Schneidkörpers eine Anzahl von dritten Durchführungsöffnungen durchquert wird, sobald die zweiten Durchführungsöffnungen zu 50% oder mehr, vorzugsweise 50% bis 100%, besonders bevorzugt zu 50%, des Durchmessers in Schneidrichtung durchquert sind.

Bei beiden vorstehenden Ausführungsformen wird ein zwei-oder mehrstufiger bzw. drei- oder mehrstufiger Schneidvorgang mit im Wesentlichen stetigem Verlauf der Schneidkraft zwischen den einzelnen Stufen erreicht.

Gemäß einer weiteren bevorzugten Ausführungsform der Erfindung weisen die Durchführungsöffnungen zu beiden Seiten des sie durchbrechenden Schlitzes Führungsabschnitte zum geradlinigen Führen der durch sie hindurchgeführten Spannlitzen auf. Aufgrund der in den Spannlitzen herrschenden Eigenspannungen neigen diese dazu, unmittelbar nach dem Trennen der einzelnen Drähte der Spannlitzen zur Seite auszuweichen, wenn der Schneidkörper in der Schneidbewegung durch die Litzen hindurchfährt. Durch das Vorsehen von Führungsabschnitten beiderseits des für die Aufnahme des Schneidkörpers vorgesehenen Schlitzes wird dieses Ausweichen verhindert, was dazu führt, dass ein im Wesentlichen geradliniges, und vorzugsweise senkrecht zu den Durchführungsöffnungen ausgebildetes Schnittbild erzeugt wird, wenn der Schlitz und die Durchführungsöffnungen senkrecht zueinander angeordnet sind.

Vorzugsweise ist bei der erfindungsgemäßen Spanntitzentrennvorrichtung gemäß einem weiteren bevorzugten Ausführungsbeispiel der Schneidkörper in Schneidrichtung ausschließlich translatorisch und im Wesentlichen spielfrei in dem Schlitz geführt. Unter einer im Wesentlichen spielfreien Führung wird hierbei verstanden, dass zwischen dem Schneidkörper und dem ihn aufnehmenden Schlitz ein Spalt von 0,3 mm oder weniger ausgebildet ist.

Gemäß einer weiteren bevorzugten Ausführungsform des Spannlitzentrennvorrichtung ist der Schneidkörper mittels einer Schraubverbindung mit einem Antriebsmittel gekoppelt. Das Antriebsmittel, weißt vorzugsweise einen Kolben auf, welcher innerhalb einer Kolbenkammer des Gehäuses angeordnet und mittels Druckbeaufschlagung der Kolbenkammer hydraulisch betätigbar ist. Besonders bevorzugt ist die Schraubverbindung senkrecht zur Schneidrichtung angeordnet, was mit anderen Worten bedeutet, dass die Längsachse der verwendeten Schrauben sich senkrecht zur Schneidrichtung erstreckt.

In einer bevorzugten Weiterbildung der Erfindung weist das Gehäuse an einer in Schneidrichtung liegenden (Stirn-)Seite eine schlitzförmige Öffnung auf, durch welche der Schneidkörper in der Schneidbewegung hindurch bewegbar ist, und durch welche der Schneidkörper in einem von dem Antriebsmittel entkoppelten Zustand entnehmbar ist. Vorzugsweise ist der Schneidkörper im entkoppelten Zustand mit der Hand entnehmbar.

Gemäß einer weiteren bevorzugten Ausführungsform definiert die Schraubverbindung ein Schraubenmuster, mit anderen Worten einen Bohrbild, und ist in dem Gehäuse ein mit dem Schraubenmuster korrespondierendes Durchgangsbohrungsmuster ausgebildet, weiches fluchtend auf das Schraubenmuster ausrichtbar ist, indem der Schneidkörper in eine vorbestimmte Position innerhalb des Gehäuses bewegt wird. Die vorbestimmte Position ist vorzugsweise eine der beiden Endpositionen des Schneidkörpers, also eine maximal eingefahrene oder maximal ausgefahrene Position des Schneidkörpers. Der Durchmesser der Durchgangsbohrung ist vorzugsweise an den jeweiligen Schraubenkopfdurchmesser der für die Kopplung des Schneidkörpers mit dem Antrieb vorgesehenen Schrauben angepasst. Durch die fluchtende Ausrichtbarkeit der Durchgangsbohrungen zu dem Schraubenmuster der Schraubverbindung lassen sich die entsprechenden Schrauben lösen und eine Entkoppelung des Schneidkörpers von dem Antriebsmittel erreichen, ohne das Gehäuse der Spannlitzentrennvorrichtung vollständig öffnen zu müssen. Durch die an der in Schneidrichtung liegenden Seite vorgesehenen Öffnung, welche vorzugsweise eine Verlängerung des Schlitzes zur Aufnahme von dem Schneidkörper ist, lässt sich sodann eine einfache und nur wenig Zeit in Anspruch nehmende Auswechslung des Schneidkörpers vornehmen.

In einer weiteren bevorzugten Ausführungsform weist die Spannlitzentrennvorrichtung eine Gleitschiene auf, die innerhalb des Schlitzes benachbart zu dem Schneidkörper angeordnet und zur Führung des Schneidkörpers in seitlicher Richtung eingerichtet ist. Unter der seitlichen Richtung wird hierbei eine Richtung quer zur Schneidrichtung des Schneidkörpers verstanden.

Vorzugsweise ist bei der erfindungsgemäßen Spannlitzentrennvorrichtung der Schneidkörper als Schneidplatte ausgebildet und weist eine Oberseite und eine zu der Oberseite im Wesentlichen parallele Unterseite auf, wobei die Schneidkante oder die Schneidkanten jeweils in einer Ausnehmung angeordnet sind, die sich jeweils durch den Schneidkörper hindurch erstreckt, und die Schneidkante oder Schneidkanten zu der Oberseite einen geringeren Abstand aufweisen als zu der Unterseite, oder zu der Unterseite einen geringeren Abstand aufweisen als zu der Oberseite. Durch diese Anordnung der Schneidkante relativ zu der Oberseite oder zu der Unterseite ist eine exzentrische Anordnung der Schneidkante in Bezug auf die Mittellinie zwischen Oberseite und Unterseite der Schneidplatte definiert. Es hat sich herausgestellt, dass die Verquetschung der Spannlitzen, die unweigerlich beim scherenden trennenden Mittels der Schneidkante oder Schneidkanten erzeugt wird, überraschend geringer ausfällt, wenn die Schneidkante nicht zentrisch angeordnet ist. Besonders bevorzugt ist bzw. sind die Schneidkante bzw. die Schneidkanten an der Oberseite oder Unterseite angeordnet. In diesem Fall ist zu der jeweiligen Seite der Schneidkante, die nicht an der Oberseite oder Unterseite liegt, sondern in die Ausnehmung hinein gerichtet ist, eine schräg verlaufende Schneide in Richtung der jeweils anderen Seite ausgebildet. Vorzugsweise liegt der Winkel einer solchen Schneide relativ zu der Oberseite bzw. Unterseite in einem Bereich von 5° bis 30°, und beträgt besonders bevorzugt 30°.

Es hat sich herausgestellt, dass im vorstehend genannten Bereich ein überraschend guter Kompromiss zwischen erforderlicher Schneidkraft, erzeugter Verquetschung und in Kauf zu nehmendem Schneidkantenverschleiß erzielt wird.

Weiter vorzugsweise weist die Schneidkante bzw. weisen die Schneidkanten einen kreisbogenförmigen Verlauf auf. Der kreisbogenförmige Verlauf ist vorzugsweise in einer Ebene parallel zur Schneidrichtung definiert. Dadurch, dass der Verlauf der Schneidkante bzw. Schneidkanten kreisbogenförmig ist, und unter Berücksichtigung der Tatsache, dass die Spannlitzen ebenfalls im Wesentlichen einen kreisförmigen Querschnitt aufweisen, kommt beim Schneiden schneller eine größere Fläche der Schneidkante mit der Spannlitze in Kontakt, was sich wiederum positiv auf den Verschleiß der Schneidkante auswirkt. Besonders bevorzugt entspricht die Krümmung der Schneidkante in der Ebene parallel zur Schneidrichtung im Wesentlichen der Krümmung der Wandung der Durchführungsöffnungen bzw. im Wesentlichen der Krümmung der Spannlitzenoberfläche.

In einer bevorzugten Alternative weist die Schneidkante bzw. weisen die Schneidkanten einen keilförmigen Verlauf auf.

Gemäß einer weiteren bevorzugten Ausführungsform der Spannlitzentrennvorrichtung sind die Durchführungsöffnungen für die Spannlitzen und der Schlitz zur Aufnahme des Schneidkörpers in einem, vorzugsweise zylindrischen, ersten Teil des Gehäuses vorgesehen, welcher mittels einer Kupplung, vorzugsweise einer Schraubkupplung umfassend eine Überwurfmutter, von einem zweiten Teil des Gehäuses entnehmbar und mit dem zweiten Teil koppelbar ist. Der zweite Teil des Gehäuses weist hierbei vorzugsweise die Kolbenkammer auf. Es wird weiterhin einen Schneidkörper für eine Spannlitzentrennvorrichtung für Spannlitzen aus Stahl offenbart, insbesondere Spannlitzen von Spannbetonbauwerken, wie beispielsweise Türmen von Windenergieanlagen, die zum Trennen eines Bündels bestehend aus einer Mehrzahl von Spannlitzen in einem Arbeitsgang eingerichtet ist, welcher zur Aufnahme in einem Gehäuse einer Spannlitzentrennvorrichtung nach einer der hierin vorstehend beschriebenen bevorzugten Ausführungsformen eingerichtet ist, eine oder mehrere Schneidkanten aufweist und relativ zu einer Mehrzahl von Durchführungsöffnungen in einem Gehäuse der Spannlitzentrennvorrichtung derart in einer Schneidrichtung bewegbar antreibbar ist, dass die Schneidkante oder die Schneidkanten die Durchführungsöffnungen vollständig durchqueren.

Für die Vorteile der erfindungsgemäßen Ausgestaltung des Schneidkörpers wird auf die vorstehenden Ausführungen verwiesen.

Die Erfindung wird im Folgenden unter Bezugnahme auf die beigefügten Figuren anhand eines bevorzugten Ausführungsbeispiels näher beschrieben. Hierbei zeigen:
- Figur 1: eine räumliche Darstellung einer Spannlitzentrennvorrichtung gemäß den bevorzugten Ausführungsbeispiel der Erfindung,
- Figur 2: eine Querschnitts-Ansicht der Spannlitzentrennvorrichtung aus Figur 1,
- Figur 3: eine mehrstufige Querschnitts-Ansicht einer Seitenprojektion zu Figur 1 entlang der Linie A-A,
- Figur 4: eine Querschnitts-Ansicht einer Seitenprojektion zu Figur 2 entlang der Linie B-B
- Figur 5: eine Querschnitts-Ansicht gemäß Figur 2 in einem alternativen Betriebszustand,
- Figur 6: eine Querschnitts-Ansicht gemäß Figur 2 und Figur 5 in einem weiteren alternativen Betriebszustand, und
- Figur 7: eine Querschnitts-Ansicht gemäß der Figur 2 und 5 und 6 in weiteren alternativen Betriebsstellung,
- Figur 8 a, b: verschiedene Ansichten eines erfindungsgemäßen Schneidkörpers.

Bezüglich identischer Teile sind die gleichen Bezugszeichen vergeben. Insoweit wird im Bezug auf jeweils eine der Figuren auch auf die Beschreibung der übrigen Figuren im Wege der Bezugnahme verwiesen, soweit technische Details betroffen sind.

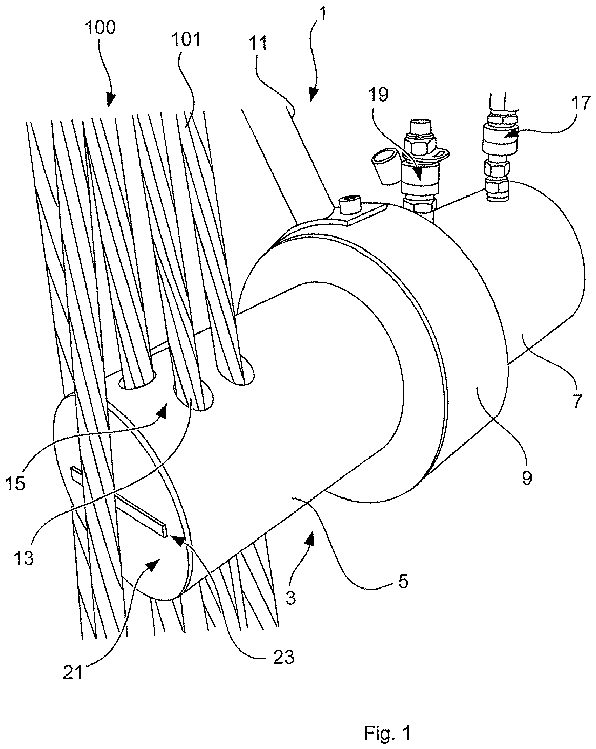

In Figur 1 ist eine räumliche Darstellung der erfindungsgemäßen Spannlitzentrennvorrichtung 1 im Einsatz gezeigt. Die Spannlitzentrennvorrichtung 1 weist ein Gehäuse 3 auf. Das Gehäuse 3 weist einen ersten Teil 5 und zweiten Teil 7 auf. Der erste Teil 5 des Gehäuses 3 ist mittels einer Überwurfmutter 9 mit dem zweiten Teil 7 des Gehäuses 3 verbunden. Die Überwurfmutter 9 weist mehrere Handgriffe (einer gezeigt) 11 auf.

Der erste Teil 5 des Gehäuses 3 weist ein Muster 15 bestehend aus einer Mehrzahl von Durchführungsöffnungen 13 auf. In jede der Durchführungsöffnungen 13 (zur Übersicht nur eine mit Bezugszeichen versehen) ist eine Spannlitze 101 eines Spannlitzenbündels 100 ein- und durch sie durchgeführt. Einige Spannlitzen sind in Figur 1 zu Veranschaulichungszwecken in nicht durchgeführtem Zustand abgebildet. In der Regel werden sämtliche Spannlitzen durchgeführt und geschnitten.

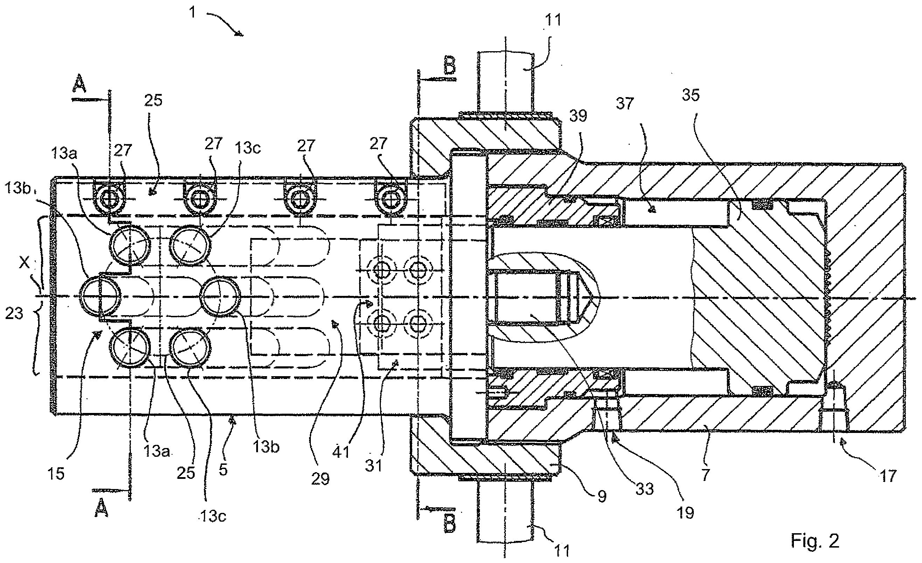

An einer in Schneidrichtung befindlichen (Stirn-) Seite 21 des Gehäuses 3 ist ein Schlitz 23 eingebracht. Durch den Schlitz 23 kann sich im Verlaufe einer Schneidbewegung ein Schneidkörper 29 nach außen hindurch erstrecken. Siehe hierzu Figur 2 und 5 bis 7.

Figur 2 zeigt eine Querschnitts-Ansicht der Spannlitzentrennvorrichtung 1 aus Figur 1. Aus Figur 2 ist zu ersehen, dass sich der Schlitz 23 vollständig in Richtung einer Achse X, welche die Schneidrichtung definiert, durch den ersten Teil 5 des Gehäuses 3 hindurch erstreckt. Innerhalb des Schlitzes 23 ist ein Schneidkörper 29 angeordnet. Der Schneidkörper 29 ist mittels einer Verschraubung, die ein Muster 41 definiert, mit einem Adapter 31 verbunden. Der Adapter 31 ist seinerseits mittels eines Gewindezapfens 33 mit einem Kolben 35 verbunden.

Der erste Teil 5 des Gehäuses weist ferner einen Keil 25 zur seitlichen Führung des Schneidkörpers innerhalb des Schlitzes 23 auf. Der Keil 25 ist mittels mehrerer Schraubverbindungen 27 mit dem Gehäuse verbunden.

Die Durchgangsöffnungen 13 in dem ersten Teil 5 des Gehäuses sind gleichmäßig entlang des Umfangs eines Kreises 25 verteilt. Der Durchmesser des Kreises 25 entspricht vorzugsweise dem Teilkreisdurchmesser des Spannlitzenbündels, mit welchem dieses durch einen Befestigungsanker für ein Fundament durchgeführt ist. Beispielsweise kann dieser Durchmesser 57,5 mm bei sechs Litzen betragen. Der Durchmesser ist für andere Spannlitzenbündel, die beispielsweise aus 9 oder 12 Litzen bestehen, vorzugsweise ein anderer. Vorzugsweise ist aus diesem Grund für jede Einbausituation, d.h. jedes verbaute Litzenbündel ein hierfür konfektionierter erster Teil 5 eines Gehäuses vorgesehen, der durch temporäres Entfernen der Überwurfmutter 9 ein- und ausgewechselt werden kann.

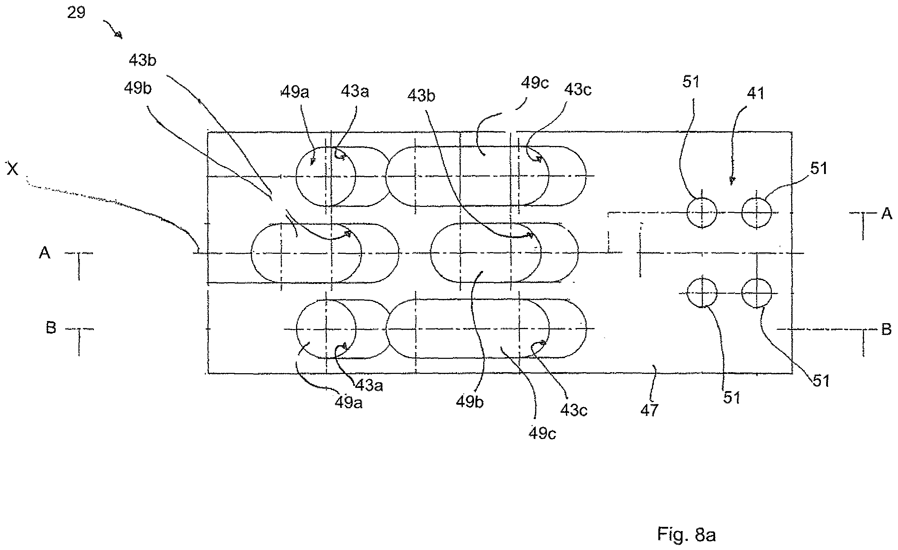

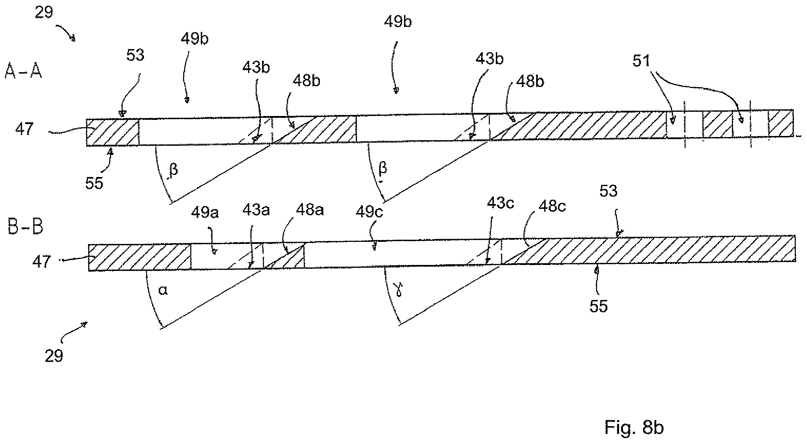

Der Schneidkörper 29 ist im Detail auch in Figur 8a, b gezeigt. Der Übersichtlichkeit halber werden weitere Ausführungen an dieser Stelle zurück gestellt.

Der Kolben 35 ist in dem zweiten Teil 7 des Gehäuses angeordnet und in einer Kolbenkammer 37 geführt bewegbar. Die Kolbenkammer 37 weist zwei druckbeaufschlagbare Unterkammern auf, die jeweils mit einem Fluidanschluss 17,19 verbunden sind. Die Betätigung des Kolbens erfolgt somit mittels Druckbeaufschlagung in beide Bewegungsrichtungen. Alternativ wäre es eine Option, den Kolben mittels einer Federrückstellung oder ähnlicher Rückholmittel auszurüsten, so dass nur eine Druckbeaufschlagung in einer Bewegungsrichtung erforderlich ist. Ein Doppelkolben wie hier gezeigt wird allerdings bevorzugt, weil die Antriebskraft auf diese Weise nicht noch zusätzlich den Widerstand eines eventuellen Rückstellelements überwinden. Der Kolben 35 wird in seinem dem ersten Teil 5 des Gehäuses zugewandten Bereich in einem Stützring 39 geführt. Der Stützring 39 ist gegen eine Schulter in dem zweiten Teil 7 des Gehäuses gelagert und bei Bedarf wechselbar.

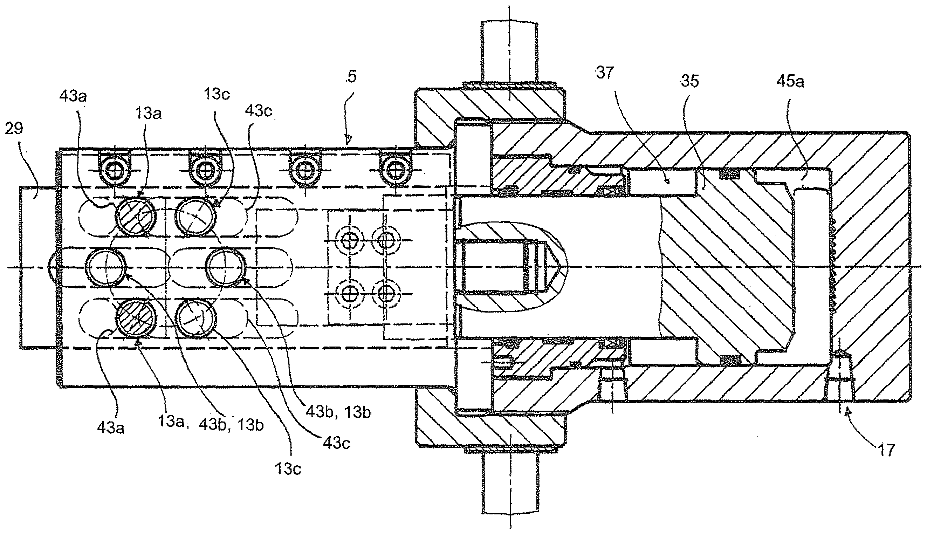

Die Durchführungsöffnungen in dem Muster 15 sind gemäß dem vorliegenden Ausführungsbeispiel unterteilt in eine erste Anzahl Durchführungsöffnungen 13a, eine zweite Anzahl Durchführungsöffnungen 13b, und eine dritte Anzahl Durchführungsöffnungen 13c. Die Bedeutung dieser Unterteilung im Hinblick auf den Schneidvorgang wird in den Figur 5 bis 7 näher erläutert.

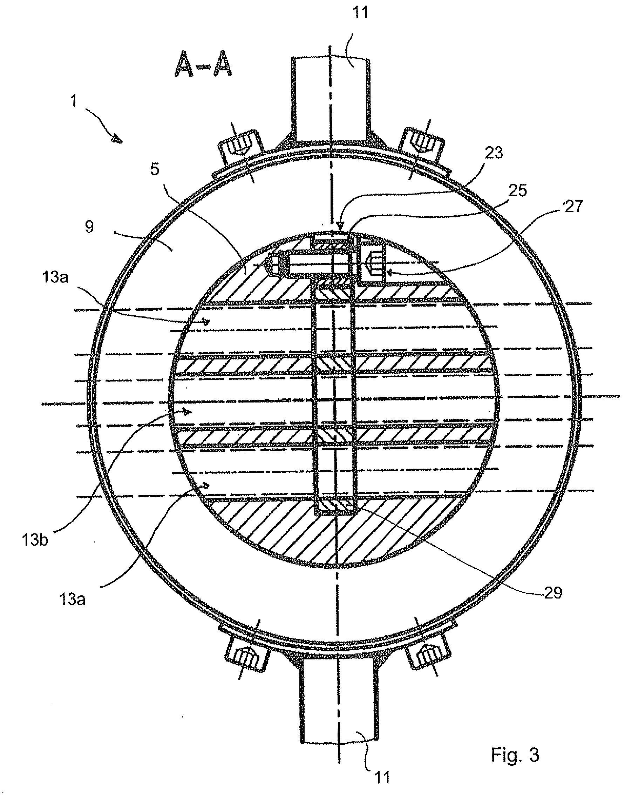

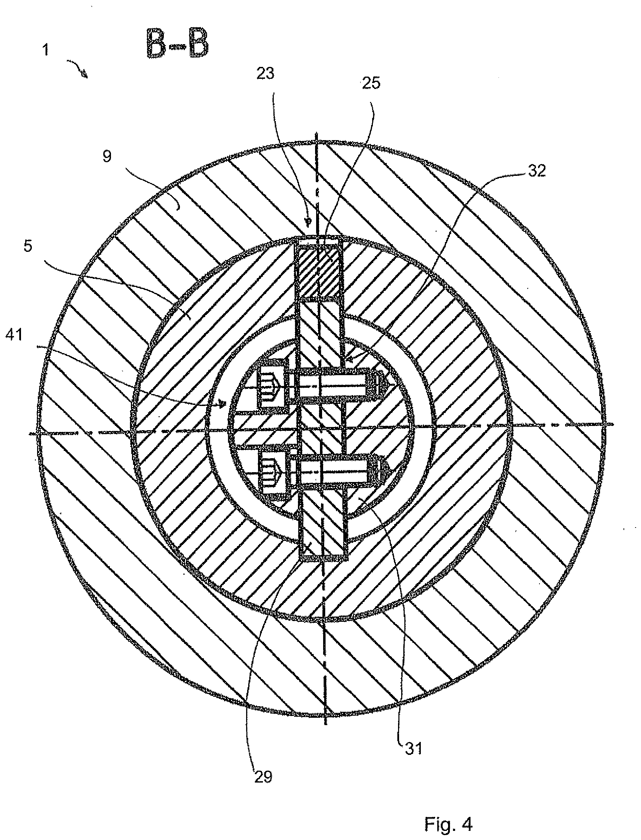

Die Figur 3 und 4 zeigen in Ergänzung der Darstellung gemäß Figur 2 zusätzliche Ansichten. Zusätzlich zu dem schon zu Figur 2 gesagten ist in Figur 3 insbesondere verdeutlicht, wie der Schneidkörper 29 innerhalb des Schlitzes 23 in dem ersten Teil 5 des Gehäuses aufgenommen ist. Die seitliche Führung wird durch den Keil 25 gewährleistet, welcher unmittelbar angrenzend an den Schneidkörper 29 in dem Schlitz 23 angeordnet und mittels der mehreren Schrauben 27 fixiert ist. Der gestufte Schnitt entlang der Linie A-A aus Figur 2 ist durch die beiden ersten Durchführungsöffnungen 13a und eine der beiden zweiten Durchführungsöffnungen 13b hindurch gelegt.

Figur 4 veranschaulicht die Aufnahme des Schneidkörpers 29 in dem Adapter 31. Der Adapter 31 weist einen Schlitz 32 auf, welcher fluchtend und mit dem Schlitz 23 in dem ersten Teil 5 des Gehäuses vorgesehen ist. Der Schneidkörper 29 ist in dem Schlitz 32 aufgenommen und mittels der in dem Muster 41 vorgesehenen Schraubverbindung fixiert. Mittels des Adapters 31 wird die Kraft von dem Kolben 35 (Figur 2) auf den Schneidkörper 29 übertragen.

Bevor im Folgenden auf den Ablauf eines Schneidvorgangs mit der erfindungsgemäßen Spannlitzentrennvorrichtung 1 eingegangen wird (Figur 2, 5 bis 7), wird bezugnehmend auf die Figur 8a, b der Aufbau des erfindungsgemäßen Schneidkörpers erläutert.

Gemäß dem Ausführungsbeispiel weist der Schneidkörper 29 für jede in dem ersten Teil 5 des Gehäuses vorgesehene Durchführungsöffnung 13 (13a, b, c) jeweils eine Ausnehmung 49 (49a, b, c) auf. Da gemäß dem gezeigten Ausführungsbeispiel sechs Durchführungsöffnungen im Gehäuse vorgesehen sind, weist der Schneidkörper 29 analog zwei erste Ausnehmungen 49a, zwei zweite Ausnehmungen 49B, sowie zwei dritte Ausnehmungen 49c auf. Die Ausnehmungen 49a, b, c erstrecken sich durch eine Schneidplatte 47 hindurch. Innerhalb jeder Ausnehmung ist eine Schneidkante 43a, b, c ausgebildet. In einer Betrachtungsrichtung senkrecht zur Achse X der Schneidbewegung des Schneidkörpers 29 ist jede Schneidkante kreisbogenförmig gekrümmt, wobei der Kreisbogendurchmesser demjenigen der Ausnehmung in 49a, b, c beziehungsweise dem Durchmesser der Durchführungsöffnungen 13a, b, c entspricht. Fertigungstoleranzen sind hierbei selbstverständlich zu erwarten, sie können für die folgenden Betrachtungen allerdings unberücksichtigt bleiben. Das jeweils der Schneidkante 43a, b, c gegenüberliegende Ende der Ausnehmungen 49a, b, c (in Richtung der Achse X) entspricht dem Muster 15 der Durchführungsöffnungen 13 in dem Gehäuse der Spannlitzentrennvorrichtung 1. Vorzugsweise ist dieser Teil der Ausnehmungen in einer ersten Endposition des Schneidkörpers 29 innerhalb des Gehäuses 3 fluchtend auf die Durchführungsöffnung 13 ausgerichtet. In dieser Position sind die Schneidkanten 43a fluchtend auf die Durchführungsöffnungen 13a ausgerichtet, sodass bei einsetzender Bewegung des Schneidkörpers 29 sofort Kontakt zwischen den Schneidkanten 43a und den in die Durchführungsöffnungen 13a eingeführten Spannlitzen hergestellt ist.

Im Vergleich hierzu sind die Schneidkanten 43b in den zweiten Ausnehmungen 49B entgegen der Schneidrichtung, die in Richtung der Achse X in Figur 8a als nach links gerichtet zu verstehen ist, versetzt, sodass die Ausnehmungen 49B im Vergleich zu den Ausnehmungen 49a länglicher in Richtung der Achse X ausgebildet sind. Im Vergleich hierzu sind die dritten Ausnehmungen 49c noch länglicher in Richtung der Achse X ausgebildet, wodurch die Schneidkanten 43c der dritten Ausnehmung 49c noch weiter entgegen der Schneidrichtung versetzt sind.

Die Länge des jeweiligen Versatzes der zweiten Schneidkanten 43b und der dritten Schneidkanten 43c relativ zu den ersten Schneidkanten 43a, und jeweils bezogen auf das Muster 15 der Durchführungsöffnungen 13 sowie die Schneidrichtung (in Richtung der Achse X) bestimmt, zu welchem Zeitpunkt welche Schneidkante mit den in die jeweilige Durchführungsöffnung eingeführten Spannlitzen in Kontakt kommt und die Durchführungsöffnung durchquert. In der gezeigten Ausführung ist der Versatz jeweils so gewählt, dass die erste Schneidkante 43a jeweils die erste Durchführungsöffnung 13a vollständig durchquert, bevor die zweite Schneidkante 43b die jeweilige zweite Durchführungsöffnung 13b durchquert. Analog ist die dritte Schneidkante 43c jeweils so weit versetzt, dass die zweite Schneidkante die zweite Durchführungsöffnung jeweils vollständig durchquert, bevor die dritte Schneidkante 43c die ihr zugeordnete dritte Durchführungsöffnung 13c durchquert. Besonders bevorzugt ist der Versatz jeweils so ausgestaltet, dass mit der Durchquerung der (n +1)ten Durchführungsöffnung mittels der (n+1)ten Schneidkante begonnen wird, sobald die (n)te Schneidkante die (n)te Durchführungsöffnung zu einem Anteil in Richtung der Achse (X) durchquert hat, welcher in einem Bereich zwischen 50% und 100% liegt.

Figur 8b verdeutlicht den plattenförmigen Aufbau des Schneidkörpers 29. Der Schneidkörper 29 weist eine Schneidplatte 47 auf. Die Schneidplatte 47 weist eine Oberseite 53 auf und eine zu der Oberseite 53 im Wesentlichen parallele Unterseite 55. Die Schneidkanten 43a, b, c der Ausnehmungen 49a, b, c sind jeweils an der Unterseite 55 angeordnet. Somit sind die Schneidkanten 43a, b, c bezogen auf die Mitte der Schneidplatte 47 exzentrisch ausgebildet. Unter "Mitte der Schneidplatte" wird hierbei die Symmetrielinie zwischen der Oberseite 53 und der Unterseite 55 der Schneidplatte 47 verstanden.

Die Ausnehmungen 49a, b, c erstrecken sich jeweils vollständig durch die Schneidplatte 47 hindurch. In den Ausnehmungen ist ausgehend von der jeweiligen Schneidkante 43a, b, c eine schräg verlaufende Schneide 48a, b, c ausgebildet. Die erste Schneide 48a läuft in einem Winkel *α* zur die Schneidkante 43a begrenzenden Unterseite 55. Die zweite Schneidfläche 48b verläuft in einem Winkel *β* zu der die Schneidkante 43b begrenzenden Unterseite 55. Analog verläuft die dritte Schneidkante 48c in einem Winkel *γ* zur die Schneidkante 43c begrenzenden Unterseite 55. Vorzugsweise sind die Winkel *α*, *β* und *γ* jeweils gleich groß ausgebildet. Der Winkel *α, β, γ* der Schneidflächen 48a, b, c liegt vorzugsweise jeweils in einem Bereich zwischen 10° und 40° und beträgt besonders bevorzugt 30°.

Anhand der Figuren 2 und 5 bis 7 wird das Abtrennen eines Spannlitzenbündels bestehend aus sechs Spannlitzen in einem Arbeitsgang veranschaulicht. In dem in Figur 2 gezeigten Zustand befindet sich der Kolben 35 und mit ihm der Schneidkörper 25 in einer ersten Endposition, die einem maximal eingefahrenen Zustand entspricht. In diesem Zustand ist der Querschnitt aller Durchführungsöffnungen 13a, b, c vollständig frei gegeben. Die Schneidkanten 43a des Schneidkörpers 29, (siehe Figur 8a) sind allerdings bereits auf die Wandung der Durchführungsöffnungen 13a ausgerichtet.

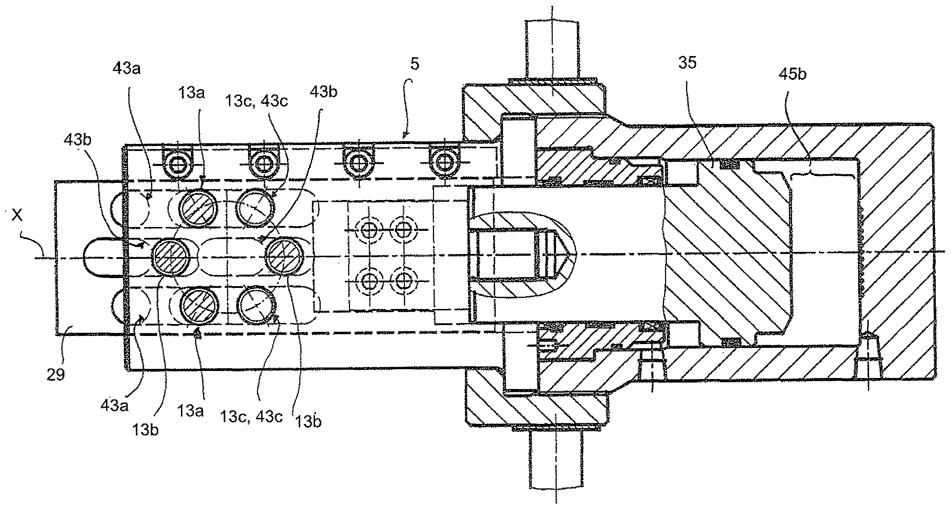

Nach erfolgter Positionierung der Spannlitzentrennvorrichtung 1 und Durchführung der Spannlitzen durch die Durchführungsöffnungen 13 wird der Kolben 35 mittels des Druckmittelanschlusses 17 mit Druck beaufschlagt und der Kolben 35 samt dem Schneidkörper 29 von dem Zustand gemäß Figur 2 in den Zustand gemäß Figur 5 bewegt. Hierbei bewegt sich der Kolben 35 um eine Strecke 45a. In dem in Figur 5 gezeigten Zustand haben die Schneidkanten 43a die Durchführungsöffnungen 13a vollständig durchquert und die darin befindlichen Spannlitzen durchtrennt. Die zweiten Schneidkanten 43b sind unmittelbar auf die Wandung der zweiten Durchführungsöffnungen 13b ausgerichtet, während die dritten Schneidkanten 43c noch ein gutes Stück von den Durchführungsöffnungen 13c beabstandet sind. Bei einer Fortsetzung der Bewegung des Schneidkörpers 29 in der Schneiderichtung der Achse X wird unmittelbar Kontakt zwischen den zweiten Schneidkanten 43b und den Spannlitzen hin den zweiten Durchführungsöffnungen 13b hergestellt. In Figur 6 ist ein zweiter Zustand des Arbeitsganges gezeigt. In diesem Zustand haben auch die zweiten Schneidkanten 43b die ihr jeweils zweiten Durchführungsöffnungen 13b vollständig durchquert und die darin befindlichen Spannlitzen durchtrennt. Der Kolben 35 ist hierbei mit samt dem Schneidkörper 29 in Richtung der Achse X um die Strecke 45b relativ zur ersten Endposition gemäß Figur 2 ausgefahren. Der Schneidkörper erstreckt sich in den Zuständen gemäß Figur 5 und 6 bereits teilweise außerhalb des ersten Teils 5 des Gehäuses.

In dem Zustand gemäß Figur 6 sind die dritten Schneidkanten 43c unmittelbar auf die dritten Durchführungsöffnungen 13c ausgerichtet, um bei einer weiteren Bewegung des Schneidkörpers 29 in Richtung der Schneidbewegung (nach links in der betrachteten Figur 6) unmittelbar mit den in den dritten Durchführungsöffnungen befindlichen Spannlitzen in Kontakt gebracht zu werden.

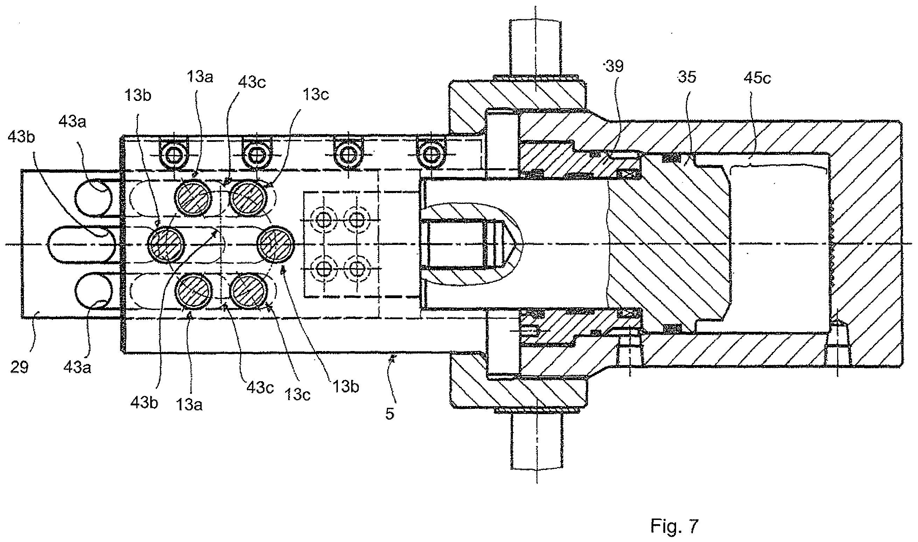

Wird der Schneidkörper 29 mittels Druckbeaufschlagung des Kolbens 35 von dem in Figur 6 gezeigten Zustand weiter in Richtung weiter in den in Figur 7 gezeigten Zustand bewegt, werden unmittelbar auch die dritten Schneidkanten 43c in Kontakt mit den Spannlitzen in den dritten Durchführungsöffnungen 13c gebracht. In Figur 7 ist der Zustand dargestellt, in welchem auch die dritten Schneidkanten 43c die dritten Durchführungsöffnungen 13c vollständig durchquert haben. Alle sechs Spannlitzen des Spannlitzenbündels sind gemäß Zustand aus Figur 7 vollständig durchtrennt.

Vorzugsweise wird der in der Figur 7 gezeigte Zustand wiederholbar festgelegt, in dem die Position des Schneidkörpers 29 relativ zu dem Gehäuse 3 und insbesondere dem ersten Teil 5 des Gehäuses in einer zweiten Endposition festgelegt wird. Dies geschieht vorzugsweise, indem der Stützring 39 einen Anschlag relativ zu dem Kolben 35 definiert, und der Kolben 35 in der Position des Schneidkörpers 29, in welchem das vollständige Durchtrennen der Litzen erfolgt ist, ihre zweite Endposition einnimmt. Der Kolben 35 ist in der Position gemäß Figur 7 um die Strecke 45c aus seiner ersten Endposition heraus ausgelenkt.

Während das Ausführungsbeispiel gemäß der Figur 1 bis 8 aus Gründen der Übersichtlichkeit ausschließlich auf eine Spannlitzentrennvorrichtung für sechs Spannlitzen abstellt, ist es ersichtlich, dass auch abweichende Ausgestaltungen vom Rahmen der Erfindung erfasst sind. Hierzu zählen insbesondere auch Ausgestaltungen einer Spannlitzentrennvorrichtung, die zum Trennen von Spannlitzenbündeln bestehend aus mehr oder weniger als sechs Spannlitzen vorbereitet ist, beispielsweise neun oder zwölf Spannlitzen. Hierfür wird das Gehäuse der Spannlitzentrennvorrichtung 1, insbesondere der erste Teil 5 des Gehäuses dahingehend abgewandelt werden, dass anstelle von sechs Durchführungsöffnungen eine entsprechende Anzahl von Durchführungsöffnungen im Gehäuse vorgesehen wird. Die Anpassung des Schneidkörpers wird an die Anzahl der zu trennenden Litzen entsprechend vorgenommen. Vorzugsweise werden jeweils mehrere Litzen von dem Schneidkörper gleichzeitig durchtrennt, während andere Litzen noch nicht durchtrennt werden oder bereits durchtrennt worden sind. Zweckmäßig erscheint die Zusammenfassung von jeweils Paaren, Drillingen oder Vierlingen von Litzen, abhängig davon, wie viel Hub des Schneidkörpers und / oder wie viel Antriebsleistung zur Verfügung steht.

Durch die Anpassung des Musters 15 der Durchführungsöffnungen 13 an die Form und insbesondere den Teilkreisdurchmesser des Spannlitzenbündels wird es möglich, mit der Spannlitzentrennvorrichtung sehr nahe an die Stelle der Verankerung des Spannlitzenbündels in dem Bauwerk heranzugehen, da eine Aufweitung des Spannlitzenbündels in nennenswertem Maße nicht erforderlich ist. Nichts desto trotz kann es wünschenswert sein, beim Betrieb der Spannlitzenvorrichtung eine gewisse Restlänge der durch die Verankerungseinrichtung durchgeführten Spannlitzenelemente übrig zu lassen, damit diese ggfs. nachgespannt werden können.

Die Spannlitzentrennvorrichtung gemäß der vorliegenden Erfindung gewährleistet insbesondere das Trennen mehrerer Spannlitzen in einem Spannlitzenbündel auf im Wesentlichen gleicher Länge bzw. in einer Schnittebene. Falls unterschiedliche Schnittebenen gewünscht sind, lässt sich dies durch entsprechende Gestaltung der Schneidkantenpositionen in der Schneidplatte des Schneidkörpers vorgeben. Der Schneidkörper ist ein Wechselteil, welches nach Verschleiß kostengünstig und mit wenig Arbeitsaufwand ausgetauscht werden kann.

## Patentansprüche

1. Spannlitzentrennvorrichtung (1) für Spannlitzen aus Stahl, insbesondere Spannlitzen von Spannbetonbauwerken wie beispielsweise Türmen von Windenergieanlagen, die zum Trennen eines Bündels bestehend aus einer Mehrzahl von Spannlitzen in einem Arbeitsgang eingerichtet ist, mit
- einem Gehäuse (3),
- einem Schneidkörper (29), der innerhalb des Gehäuses angeordnet ist,
- einer Mehrzahl von Durchführungsöffnungen (13) entsprechend der Mehrzahl von Spannlitzen, die sich durch das Gehäuse hindurch erstrecken,
wobei die Durchführungsöffnungen jeweils von einem Schlitz (23) durchbrochen sind, der zur Aufnahme des Schneidkörpers (29) angepasst ist, der Schneidkörper mehrere Schneidkanten (43a, b, c) aufweist und relativ zu den Durchführungsöffnungen derart in einer Schneidrichtung bewegbar in dem Gehäuse antreibbar ist, dass die Schneidkanten (43a, b, c) die Durchführungsöffnungen vollständig durchqueren, wobei die Durchführungsöffnungen gleichmäßig entlang eines vorgegebenen Kreisumfangs (25) in dem Gehäuse angeordnet sind,
wobei der Schneidkörper für jede der Durchführungsöffnungen (13a, b, c) eine separate Schneide mit einer Schneidkante (43a, b, c) aufweist,
**dadurch gekennzeichnet, dass** die Schneidkanten (43a, b, c) in Schneidrichtung relativ zueinander derart versetzt sind, dass bei Bewegung des Schneidkörpers (29) eine Anzahl von Durchführungsöffnungen (13a, b, c) gleichzeitig von den Schneidkanten (43a, b, c) durchquert wird, die geringer als die Gesamtzahl der Mehrzahl von Durchführungsöffnungen ist.

2. Spannlitzentrennvorrichtung (1) nach Anspruch 1,
wobei die Schneidkanten in Schneidrichtung relativ zueinander derart versetzt sind, dass bei Bewegung des Schneidkörpers in der Schneidrichtung eine Anzahl von ersten Durchführungsöffnungen zuerst von den Schneidkanten durchquert wird, und eine Anzahl von zweiten Durchführungsöffnungen von den Schneidkanten durchquert wird, sobald die ersten Durchführungsöffnungen zu 50% oder mehr des Durchmessers in Schneidrichtung durchquert sind.

3. Spannlitzentrennvorrichtung (1) nach Anspruch 2,
wobei die Schneidkanten in Schneidrichtung relativ zueinander derart versetzt sind, dass bei Bewegung des Schneidkörpers eine Anzahl von dritten Durchführungsöffnungen von den Schneidkanten durchquert wird, sobald die zweiten Durchführungsöffnungen zu 50% oder mehr des Durchmessers in Schneidrichtung durchquert sind.

4. Spannlitzentrennvorrichtung (1) nach einem der vorstehenden Ansprüche,
wobei die Durchführungsöffnungen zu beiden Seiten des sie durchbrechenden Schlitzes Führungsabschnitte zum geradlinigen Führen der durch sie hindurchgeführten Spannlitzen aufweisen.

5. Spannlitzentrennvorrichtung (1) nach einem der vorstehenden Ansprüche,
wobei der Schneidkörper in Schneidrichtung translatorisch und im Wesentlichen spielfrei in dem Schlitz geführt bewegbar ist.

6. Spannlitzentrennvorrichtung (1) nach Anspruch 5,
wobei der Schneidkörper mittels einer Schraubverbindung mit einem Antriebsmittel (35) gekoppelt ist.

7. Spannlitzentrennvorrichtung (1) nach Anspruch 6,
wobei das Gehäuse an einer in Schneidrichtung liegenden Seite eine, vorzugsweise schlitzförmige Öffnung aufweist, durch welche der Schneidkörper in der Schneidbewegung teilweise hindurch bewegbar ist, und durch welche der Schneidkörper in einem von dem Antriebsmittel entkoppelten Zustand entnehmbar ist

8. Spannlitzentrennvorrichtung (1) nach einem der vorstehenden Ansprüche,
wobei die Schraubverbindung ein Schraubenmuster (41) definiert und in dem Gehäuse ein mit dem Schraubenmuster korrespondierendes Durchgangbohrungsmuster ausgebildet ist, welches fluchtend auf das Schraubenmuster ausrichtbar ist, indem der Schneidkörper in eine vorbestimmte Position innerhalb des Gehäuses bewegt wird.

9. Spannlitzentrennvorrichtung (1) nach einem der vorstehenden Ansprüche,
mit einer Gleitschiene (25), die innerhalb des Schlitzes (23) benachbart zu dem Schneidkörper (29) angeordnet und zur Führung des Schneidkörpers eingerichtet ist.

10. Spannlitzentrennvorrichtung (1) nach einem der vorstehenden Ansprüche,
wobei der Schneidkörper (29) eine Schneidplatte (47) aufweist, die eine Oberseite (53) und eine zu der Oberseite (53) im Wesentlichen parallele Unterseite (55) aufweist, die Schneidkante oder die Schneidkanten (43a, b, c) jeweils in einer Ausnehmung (49a, b, c) angeordnet sind, die sich jeweils durch den Schneidkörper (29) hindurch erstreckt, und die Schneidkante oder Schneidkanten zu der Oberseite einen geringeren Abstand aufweisen als zu der Unterseite, oder zu der Unterseite einen geringeren Abstand aufweisen als zu der Oberseite.

11. Spannlitzentrennvorrichtung (1) nach einem der vorstehenden Ansprüche,
wobei die Durchführungsöffnungen für die Spannlitzen und der Schlitz zur Aufnahme des Schneidkörpers in einem, vorzugsweise zylindrischen, ersten Teil (5) des Gehäuses (3) vorgesehen sind, welcher mittels einer Kupplung, vorzugsweise einer Schraubkupplung umfassend eine Überwurfmutter (9), von einem zweiten Teil (7) des Gehäuses (3) entnehmbar und mit dem zweiten Teil koppelbar ist.

## Claims

1. A stranded tensioning wire severing apparatus (1) for stranded tensioning wires of steel, in particular stranded tensioning wires of prestressed concrete structures such as for example pylons of wind power installations, which is adapted to sever a bundle comprising a plurality of stranded tensioning wires in one working operation, comprising
- a housing (3),
- a cutting body (29) arranged within the housing, and
- a plurality of passage openings (13) corresponding to the plurality of stranded tensioning wires, which extend through the housing,
wherein the passage openings are each penetrated by a slot (23) adapted to receive the cutting body (29), the cutting body has a plurality of cutting edges (43a, b, c) and is drivable in the housing movably in a cutting direction relative to the passage openings in such a way that the cutting edges (43a, b, c) completely transit through the passage openings,
wherein the passage openings are arranged uniformly along a predetermined circular periphery (25) in the housing,
wherein the cutting body has a separate cutting portion with a cutting edge (43a, b, c) for each of the passage openings (13a, b, c),
**characterized in that** the cutting edges (43a, b, c) are displaced relative to each other in the cutting direction in such a way that upon movement of the cutting body (29) a number of passage openings (13a, b, c) is simultaneously transited by the cutting edges (43a, b, c), which is less than the total number of the plurality of passage openings.

2. A stranded tensioning wire severing apparatus (1) according to claim 1 wherein the cutting edges are displaced relative to each other in the cutting direction in such a way that upon movement of the cutting body in the cutting direction a number of first passage openings is firstly transited by the cutting edges, and a number of second passage openings is transited by the cutting edges as soon as the first passage openings are transited to 50% or more of the diameter in the cutting direction.

3. A stranded tensioning wire severing apparatus (1) according to claim 2 wherein the cutting edges are displaced relative to each other in the cutting direction in such a way that upon movement of the cutting body a number of third passage openings is transited by the cutting edges, as soon as the second passage openings are transited to 50% or more of the diameter in the cutting direction.

4. A stranded tensioning wire severing apparatus (1) according to one of the preceding claims wherein the passage openings at both sides of the slot penetrating through them have guide portions for rectilinearly guiding the stranded tensioning wires passed through them.

5. A stranded tensioning wire severing apparatus (1) according to one of the preceding claims wherein the cutting body is movable with a translatory movement in the cutting direction and guided substantially play-free in the slot.

6. A stranded tensioning wire severing apparatus (1) according to claim 5 wherein the cutting body is coupled to a drive means (35) by means of a screw connection.

7. A stranded tensioning wire severing apparatus (1) according to claim 6 wherein at a side in the cutting direction the housing has a preferably slot-shaped opening through which the cutting body is movable partially in the cutting movement and through which the cutting body is removable in a condition of being uncoupled from the drive means.

8. A stranded tensioning wire severing apparatus (1) according to one of the preceding claims wherein the screw connection defines a screw pattern (41) and provided in the housing is a through bore pattern which corresponds to the screw pattern and which can be oriented in aligned relationship with the screw pattern by the cutting body being moved into a predetermined position within the housing.

9. A stranded tensioning wire severing apparatus (1) according to one of the preceding claims comprising a slide rail (25) which is arranged within the slot (23) adjacent to the cutting body (29) and which is adapted to guide the cutting body.

10. A stranded tensioning wire severing apparatus (1) according to one of the preceding claims wherein the cutting body (29) has a cutting plate (24) having a top side (53) and an underside (55) substantially parallel to the top side (53), the cutting edge or edges (43a, b, c) are arranged in a respective aperture (49a, b, c) respectively extending through the cutting body (29) and the cutting edge or edges are at a smaller spacing relative to the top side than relative to the underside, or are at a smaller spacing relative to the underside than relative to the top side.

11. A stranded tensioning wire severing apparatus (1) according to one of the preceding claims wherein the passage openings for the stranded tensioning wires and the slot for receiving the cutting body are provided in a preferably cylindrical first portion (5) of the housing (3) which can be removed from a second portion (7) of the housing (3) by means of a coupling, preferably a screw coupling including a union nut (9), and can be coupled to the second portion.

## Revendications

1. Dispositif de sectionnement de torons tendeurs (1) pour des torons tendeurs en acier, en particulier des torons tendeurs de structures en béton précontraint telles que des mâts d'éoliennes, qui est mis au moins pour sectionner un faisceau constitué d'une multitude de torons tendeurs lors d'un cycle de travail, avec
- un boîtier (3),
- un corps de découpage (29), qui est disposé à l'intérieur du boîtier,
- une multitude d'ouvertures de passage (13) correspondant à la multitude de torons tendeurs, qui s'étendent à travers le boîtier de part en part,
dans lequel les ouvertures de passage sont transpercées respectivement par une entaille (23), qui est adaptée pour recevoir le corps de découpage (29), lequel corps de découpage présente plusieurs arêtes de découpage (43a, b, c) et peut être entraîné dans le boîtier de manière à pouvoir être déplacé par rapport aux ouvertures de passage dans une direction de découpage de telle manière que les arêtes de découpage (43a, b, c) traversent complètement les ouvertures de passage, dans lequel les ouvertures de passage sont disposées dans le boîtier de manière uniforme le long d'une périphérie de cercle (25) spécifiée,
dans lequel le corps de découpage présente pour chacune des ouvertures de passage (13a, b, c) un tranchant séparé avec une arête de découpage (43a, b, c),
**caractérisé en ce que** les arêtes de découpage (43a, b, c) sont décalées les unes par rapport aux autres dans la direction de découpage de telle manière que, lors du déplacement du corps de découpage (29), un nombre d'ouvertures de passage (13a, b, c) est traversé de manière simultanée par les arêtes de découpage (43a, b, c), qui est inférieur au nombre total de la multitude d'ouvertures de passage.

2. Dispositif de sectionnement de torons tendeurs (1) selon la revendication 1,
dans lequel les arêtes de découpage sont décalées les unes par rapport aux autres dans la direction de découpage de telle manière que, lors du déplacement du corps de découpage dans la direction de découpage, un nombre de premières ouvertures de passage est traversé dans un premier temps par les arêtes de découpage et un nombre de deuxièmes ouvertures de passage est traversé par les arêtes de découpage dès que les premières ouvertures de passage sont traversées à hauteur de 50 % ou plus du diamètre dans la direction de découpage.

3. Dispositif de sectionnement de torons tendeurs (1) selon la revendication 2,
dans lequel les arêtes de découpage sont décalées les unes par rapport aux autres dans la direction de découpage de telle manière que, lors du déplacement du corps de découpage, un nombre de troisièmes ouvertures de passage est traversé par les arêtes de découpage dès que les deuxièmes ouvertures de passage sont traversées à hauteur de 50 % ou plus du diamètre dans la direction de découpage.

4. Dispositif de sectionnement de torons tendeurs (1) selon l'une quelconque des revendications précédentes,
dans lequel les ouvertures de passage présentent, de part et d'autre de l'entaille les transperçant, des sections de guidage servant à guider de manière rectiligne les torons tendeurs guidés à travers les sections de guidage de part en part.

5. Dispositif de sectionnement de torons tendeurs (1) selon l'une quelconque des revendications précédentes,
dans lequel le corps de découpage peut être déplacé par translation dans la direction de découpage et de manière guidée dans l'entaille sensiblement sans jeu.

6. Dispositif de sectionnement de torons tendeurs (1) selon la revendication 5,
dans lequel le corps de découpage est couplé à un moyen d'entraînement (35) au moyen d'une liaison à vis.

7. Dispositif de sectionnement de torons tendeurs (1) selon la revendication 6,
dans lequel le boîtier présente, au niveau d'un côté situé dans la direction de découpage, une ouverture, de préférence en forme d'entaille, à travers laquelle le corps de découpage peut être déplacé en partie de part en part lors du déplacement de découpage et à travers laquelle le corps de découpage peut être retiré dans un état découplé du moyen d'entraînement.

8. Dispositif de sectionnement de torons tendeurs (1) selon l'une quelconque des revendications précédentes,
dans lequel la liaison à vis définit un modèle de vis (41) et un modèle d'alésage de passage correspondant au modèle de vis est réalisé dans le boîtier, lequel peut être orienté au même niveau que le modèle de vis en ce que le corps de découpage est déplacé à l'intérieur du boîtier dans une position prédéfinie.

9. Dispositif de sectionnement de torons tendeurs (1) selon l'une quelconque des revendications précédentes,
avec un rail coulissant (25), qui est disposé à l'intérieur de l'entaille (23) de manière adjacente au corps de découpage (29) et est mis au point pour guider le corps de découpage.

10. Dispositif de sectionnement de torons tendeurs (1) selon l'une quelconque des revendications précédentes,
dans lequel le corps de découpage (29) présente une plaque de découpage (47), qui présente un côté supérieur (53) et un côté inférieur (55) sensiblement parallèle par rapport au côté supérieur (53), l'arête de découpage ou les arêtes de découpage (43a, b, c) sont disposées respectivement dans un évidement (49a, b, c), qui s'étend respectivement à travers le corps de découpage (29) de part en part, et l'arête de découpage ou les arêtes de découpage présentent, par rapport au côté supérieur, une distance plus petite que par rapport au côté inférieur ou présentent, par rapport au côté inférieur, une distance plus petite que par rapport au côté supérieur.

11. Dispositif de sectionnement de torons tendeurs (1) selon l'une quelconque des revendications précédentes, dans lequel les ouvertures de passage sont prévues pour les torons tendeurs et l'entaille est prévue pour recevoir le corps de découpage dans une première partie (5), de préférence cylindrique, du boîtier (3), laquelle peut être retirée d'une deuxième partie (7) du boîtier (3) et peut être couplée à la deuxième partie au moyen d'un couplage, de préférence d'un couplage à vis comprenant un écrou-raccord (9).
